# EUROPÄISCHE PATENTSCHRIFT

(11) **EP 2 284 525 B1**
(45) Veröffentlichungstag und Bekanntmachung des Hinweises auf die Patenterteilung: **15.02.2012**
(21) Anmeldenummer: 09010350.8
(22) Anmeldetag: 11.08.2009
(51) Int. Cl.: G01N 25/04, G08B 19/02

(54) **Berührungslose Gefriertemperaturbestimmung**
Contact-less freezing temperature determination
Détermination de la température de congélation sans contact

(43) Veröffentlichungstag der Anmeldung: 16.02.2011
(73) Patentinhaber: G. Lufft Mess- und Regeltechnik GmbH, 70736 Fellbach-Schmiden (DE)
(72) Erfinder: Schmitz-Hübsch, Axel, 71686 Remseck (DE)
(74) Vertreter: Grünecker, Kinkeldey, Stockmair & Schwanhäusser

(56) Entgegenhaltungen:
- EP-A- 0 898 147
- WO-A-97/13234
- US-A- 6 166 657

## Beschreibung

### Gebiet der Erfindung

Die vorliegende Erfindung betrifft die Bestimmung von Gefriertemperaturen auf Straßen und insbesondere die berührungslose Bestimmung von Gefriertemperaturen mithilfe optischer Sensoren.

### Hintergrund der Erfindung

Zur Erhöhung der Verkehrssicherheit auf winterlichen Straßen finden allgemein Streusalze Anwendung. Eine wichtige Größe für die Organisation des Einsatzes der Winterdienste sowie für die notwendige Menge des auszubringenden Streusalzes ist hierbei die Gefriertemperatur auf der Straße. Die Gefriertemperatur wird im Stand der Technik durch eine in der Straße verbaute Sensorik bestimmt. Diese Sensorik umfasst beispielsweise Elektroden, mithilfe derer die Leitfähigkeit des Wassers bzw. des Wasser-Eis-Gemisches auf der Straße und somit der Salzgehalt ermittelt wird. Über den Salzgehalt wird dann die Gefriertemperatur bestimmt. Gemäß einem anderen Ansatz wird eine wässrige Salzlösung aktiv abgekühlt, und es wird die Gefriertemperatur anhand des ermittelten Enthalpiesprungs bestimmt.

Der Einbau sowie die Wartung der Sensorik erfordert jedoch einen hohen Arbeitsaufwand und Störungen des Verkehrsflusses durch die beim Einbau bzw. der Wartung erforderliche Straßensperrung. Außerdem gibt die eingebaute Sensorik lediglich lokal und relativ kleinflächig über die Gefriertemperatur Auskunft.

Der vorliegenden Erfindung liegt die Aufgabe zugrunde, die genannten Nachteile der herkömmlichen Gefriertemperaturbestimmung zu beheben und eine lokale oder nichtlokale zuverlässige Gefriertemperaturbestimmung auf winterlichen Straßen bereitzustellen.

### Beschreibung der Erfindung

Die oben genannte Aufgabe wird durch das Verfahren gemäß Anspruch 1 und die Vorrichtung gemäß Anspruch 7 gelöst. Es wird somit bereitgestellt ein
Verfahren zur Bestimmung der Gefriertemperatur eines Eis-Wasser-Gemischs auf einer Straßenoberfläche, das umfasst
Bereitstellen von Referenzmessungen von Eis-zu-Wasser-Verhältnissen in Abhängigkeit von Straßentemperaturen für unterschiedliche Salzgehalte von Referenz-Eis-Wasser-Gemischen;
Bestimmen eines Eis-zu-Wasser-Verhältnisses des Eis-Wasser-Gemisches;
Ermitteln der Temperatur der Straßenoberfläche; und
Bestimmen der Gefriertemperatur des Eis-Wasser-Gemisches aus dem bestimmten Eis-zu-Wasser-Verhältnis und der ermittelten Temperatur mithilfe der bereitgestellten Referenzmessungen.

Hierbei wird eine Dicke einer Wasserschicht (Dicke von Wasser) auf einer Straße und eine Dicke einer Eisschicht (Dicke von Eis) auf der Straße ermittelt und das Eis-zu-Wasser-Verhältnis des Eis-Wasser-Gemisches aus der ermittelten Dicke der Wasserschicht und der ermittelten Dicke der Eisschicht bestimmt.

Es wird weiterhin bereitgestellt eine
Vorrichtung zur (berührungslosen) Bestimmung der Gefriertemperatur eines Eis-Wasser-Gemischs auf einer Straßenoberfläche, umfassend
eine Speichereinheit, in der Referenzmesswerte von Eis-zu-Wasser-Verhältnissen in Abhängigkeit von Straßentemperaturen für unterschiedliche Salzgehalte von Referenz-Eis-Wasser-Gemischen gespeichert sind;
eine erste Sensoreinrichtung, die dazu ausgebildet ist, die Temperatur der Straße (Straßenoberflächentemperatur) zu ermitteln; und
eine Recheneinheit, die dazu eingerichtet ist ein Eis-zu-Wasser-Verhältnis des Eis-Wasser-Gemisches zu bestimmen und aus dem bestimmten Eis-zu-Wasser-Verhältnis (Anteil von Eis an dem Eis-Wasser-Gemisch), der ermittelten Temperatur der Straße und den gespeicherten Referenzmesswerten die Gefriertemperatur des Eis-Wasser-Gemisches zu bestimmen.

Die Vorrichtung umfasst weiterhin eine zweite Sensoreinrichtung, die dazu eingerichtet ist, eine Dicke einer Wasserschicht (Dicke von Wasser) auf einer Straße und eine Dicke einer Eisschicht (Dicke von Eis) auf der Straße zu ermitteln. Die Recheneinheit ist dazu eingerichtet, das Eis-zu-Wasser-Verhältnis des Eis-Wasser-Gemisches aus der ermittelten Dicke der Wasserschicht und der ermittelten Dicke der Eisschicht zu bestimmen.

Die Ermittlung der Temperatur der Straße erfolgt streng genommen für die Oberfläche der Straße. Wenn im weiteren der Einfachheit halber an verschiedenen Stellen von der Straße gesprochen wird, so versteht sich, dass die Temperatur der Straßenoberfläche gemessen wird und die Dicke der Wasserschicht/Eisschicht des Eis-Wasser-Gemisches auf der Straßenoberfläche gemessen wird. Es versteht sich, dass die Wasserschicht/Eisschicht, deren Dicke ermittelt wird, aus mehreren Schichten bestehen kann, die ermittelte Dicke also der gesamten Dicke mehrerer Wasserschichten/Eisschichten, die in dem Eis-Wasser-Gemisch vorliegen, entspricht. Insbesondere wird in allgemeinen das Eis-Wasser-Gemisch nicht lediglich eine homogene Wasserschicht mit einer homogenen Eisschicht darauf oder darunter aufweisen.

Die Bestimmung der Gefriertemperatur erfolgt derart, dass kein direkter mechanischer Kontakt zwischen der Vorrichtung, mithilfe der die Gefriertemperatur auf einer Straße bestimmt wird, und der Straßenoberfläche notwendig ist. Insbesondere kann die erfindungsgemäße Vorrichtung an einem Fahrzeug, wie einem Personenkraftwagen oder Lastkraftwagen, angebracht sein, und es kann die Gefriertemperatur kontinuierlich oder diskontinuierlich entlang zumindest eines Abschnitts der Straße während der Fahrt des Fahrzeugs entlang der Straße bestimmt werden.

Im Gegensatz zum oben beschriebenen Stand der Technik kann also mobil an vielen Stellen der Straße die Gefriertemperatur des auf der Straße befindlichen Eis-Wasser-Gemisches bestimmt werden. Installation und Wartung der Vorrichtung erfordern keine Straßenbauarbeiten. Die Gefriertemperatur, also die Temperatur bei der das Wasser des Eis-Wasser-Gemisches zu gefrieren/kristallieren beginnt, wird zuverlässig auf der Grundlage zuvor erstellter Messreihen bestimmt, die den Anteil, insbesondere den prozentualen Anteil, von Eis an Referenz-Eis-Wasser-Gemischen zu unterschiedlichen Straßentemperaturen und für verschiedene Salzgehalte der Referenz-Eis-Wasser-Gemische in Bezug setzen. Hierbei sei bemerkt, dass in der vorliegenden Anmeldung das Eis-Wasser-Gemisch prinzipiell von 0 bis 100% Eis enthalten kann.

Gemäß einem Beispiel umfasst der Schritt des Bestimmens der Gefriertemperatur aus dem bestimmten Eis-zu-Wasser-Verhältnis und der ermittelten Straßentemperatur mithilfe der bereitgestellten Referenzmessungen das Bestimmen des Salzgehaltes des Eis-Wasser-Gemisches aus dem bestimmten Eis-zu-Wasser-Verhältnis und der ermittelten Straßentemperatur mithilfe der bereitgestellten Referenzmessungen und das Bestimmen der Gefriertemperatur aus dem bestimmten Salzgehalt und den bereitgestellten Referenzmessungen/Referenzmesskurven (für Details siehe Beschreibung unten mit Bezug auf die Zeichnung).

Die Dicke der Wasserschicht und/oder die Dicke der Eisschicht kann mithilfe optischer Sensoren und insbesondere mithilfe von Infrarot-Spektroskopie ermittelt werden. Die Temperatur der Straße kann mithilfe eines Infrarot-Temperatursensors ermittelt werden. Zur Ermittlung der Wasserschichtdicke/Eisschichtdicke können Einrichtungen Verwendung finden, wie sie aus der DE 4133359 A1 bekannt sind. Handelsübliche Quotientenpyrometer, Schmalbandpyrometer oder Bandstrahlungspyrometer können zur Temperaturmessung verwendet werden. Somit ist die Ermittlung der Wasserschichtdicke/Eisschichtdicke und somit des prozentualen Eisanteils (Eisprozent) sowie der Straßentemperatur berührungslos und zuverlässig mit relativ geringem Aufwand möglich.

Entsprechend kann die oben angeführte erfindungsgemäße Vorrichtung derart vorgesehen werden, dass die zweite Sensoreinrichtung zumindest einen optischen Sensor umfasst und/oder die erste Sensoreinrichtung einen Infrarot-Temperatursensor umfasst. Die zweite Sensoreinrichtung kann eine Infrarot-Spektroskopieeinrichtung umfassen. Darüber hinaus kann die erfindungsgemäße Vorrichtung zumindest eine Lichtquelle umfassen, die dazu ausgebildet ist, Licht in einem vorbestimmten Wellenlängenbereich, insbesondere im Infrarotbereich, auszustrahlen. Das von der Straße nach Durchgang durch das Eis-Wasser-Gemisch reflektierte Licht wird sodann detektiert. Beispielsweise kann die Lichtquelle ein breitbandiges Licht bekannten Spektrums abstrahlen. Da das Eis-Wasser-Gemisch die Strahlung in Abhängigkeit von der Wellenlänge absorbiert erlaubt die Analyse des reflektierten Lichts die Dickenbestimmung der Eisschicht und der Wasserschicht. Hierbei wird davon Gebrauch gemacht, dass die Absorbtionsbande von Eis und Wasser unterschiedlich sind.

Die Recheneinheit der Vorrichtung ist gemäß einer Weiterbildung dazu eingerichtet den Salzgehalt des Eis-Wasser-Gemisches aus dem bestimmten Eis-zu-Wasser-Verhältnis und der ermittelten Temperatur mithilfe der gespeicherten Referenzmesswerte zu bestimmen und die Gefriertemperatur aus dem bestimmten Salzgehalt und den gespeicherten Referenzmesswerten zu bestimmen.

Weitere Merkmale und eine beispielhafte Ausführungsform der vorliegenden Erfindung, werden nachfolgend anhand der Zeichnung näher erläutert. Es versteht sich, dass die Ausführungsform nicht den Bereich der vorliegenden Erfindung erschöpft.
Figur 1 stellt ein Flussdiagramm dar, das der Veranschaulichung einiger Schritte einer beispielhaften Ausführungsform des erfindungsgemäßen Verfahrens dient.
Figur 2 zeigt Referenzkurven zu Referenzmesswerten, die der erfindungsgemäßen Bestimmung der Gefriertemperatur eines Eis-Wasser-Gemisches auf einer Straßenoberfläche dienen.

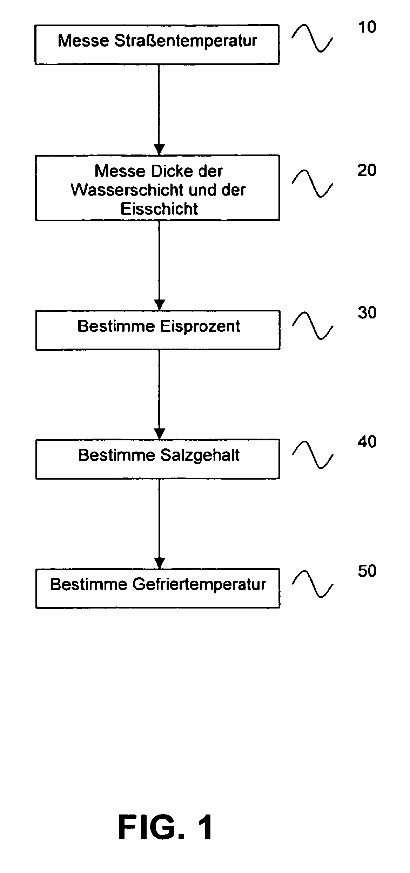

Wie es in Figur 1 gezeigt ist, umfasst das erfindungsgemäße Verfahren zur berührungslosen Bestimmung einer Gefriertemperatur eines Eis-Wasser-Gemischs auf einer Straßenoberfläche den Schritt des Messens der Straßentemperatur 10. Hierbei kann insbesondere die Wärmestrahlung der Straßenoberfläche detektiert werden. Zudem wird die Dicke der Wasserschicht und die Dicke der Eisschicht gemessen 20. Die Messung kann spektroskopisch beispielsweise im nahen Infrarotbereich erfolgen. Zum Beispiel kann Licht mit Wellenlängen von 1450 nm und 1190 oder 1080 nm ausgesendet und das reflektierende Licht detektiert werden, wie es in der DE 4133359 A1 beschrieben ist. Es versteht sich, dass die Reihenfolge von Temperaturmessung und Dickenmessung unerheblich ist. Aus dem Verhältnis von Dicke der Wasserschicht zu Dicke der Eisschicht lässt sich direkt der prozentual Anteil von Eis (Eisprozent) an dem Eis-Wasser-Gemisch auf der Straße bestimmen 30. Es sei nochmals erwähnt, dass nicht von einer homogenen Wasserschicht/Eisschicht auszugehen ist, sondern die Dicke des insgesamt in dem Eis-Wasser-Gemisch auf der Straße vorhandenen Wassers bzw. Eises bestimmt wird. Hierbei kann insbesondere die gesamte Dicke des in dem Eis-Wasser-Gemisch vorliegenden Eises bzw. die gesamte Dicke des in dem Eis-Wasser-Gemisch vorliegenden Wassers mithilfe einer im Stand der Technik prinzipiell bekannten Filterung mit Filtern unterschiedlicher Wellenlängenempfindlichkeiten ermittelt werden.

Gemäß der hier beschriebenen Ausführungsform wird auf Grundlage des in Schritt 30 bestimmten prozentualen Anteils von Eis an dem Eis-Wasser-Gemisch der Salzgehalt / die Salzkonzentration des Eis-Wasser-Gemisches bestimmt 40. Hierzu finden zuvor erstellte Referenzmesswerte für Referenz-Eis-Wasser-Gemische Anwendung. Diese Referenzmesswerte können wie folgt gewonnen werden. Eine Wasser-Salzlösung mit einem wohldefinierten Salzgehalt wird kontinuierlich abgekühlt. Bei Erreichen der Gefriertemperatur bilden sich erste Eiskristalle. Der prozentuale Anteil von Eis wächst mit weiter sinkenden Temperaturen bis letztlich die ursprünglich flüssige Wasser-Salzlösung komplett gefroren ist (100 % Eisprozent). Dieser funktionelle empirisch ermittelte Zusammenhang von Eisprozent und Temperatur wird für eine Anzahl an Referenz-Eis-Wasser-Gemische (ausgehend jeweils von vollständigen flüssigen Lösungen) für unterschiedliche Salzgehalte erhoben und als Referenzmessungen bereitgestellt.

Die unter kontrollierten Versuchsbedingungen kontrollierte Temperatur wird für die Bestimmung der realen Gefriertemperatur des Eis-Wasser-Gemisches auf der Straße der gemessenen Straßentemperatur äquivalent gesetzt. Der unter kontrollierten Versuchsbedingungen bestimmte jeweilige prozentuale Eisanteil wird dem mithilfe der gemessenen Dicke der Wasserschicht und der Eisschicht des Eis-Wasser-Gemisches auf der Straße bestimmten Eis-zu-Wasser-Verhältnis äquivalent gesetzt.

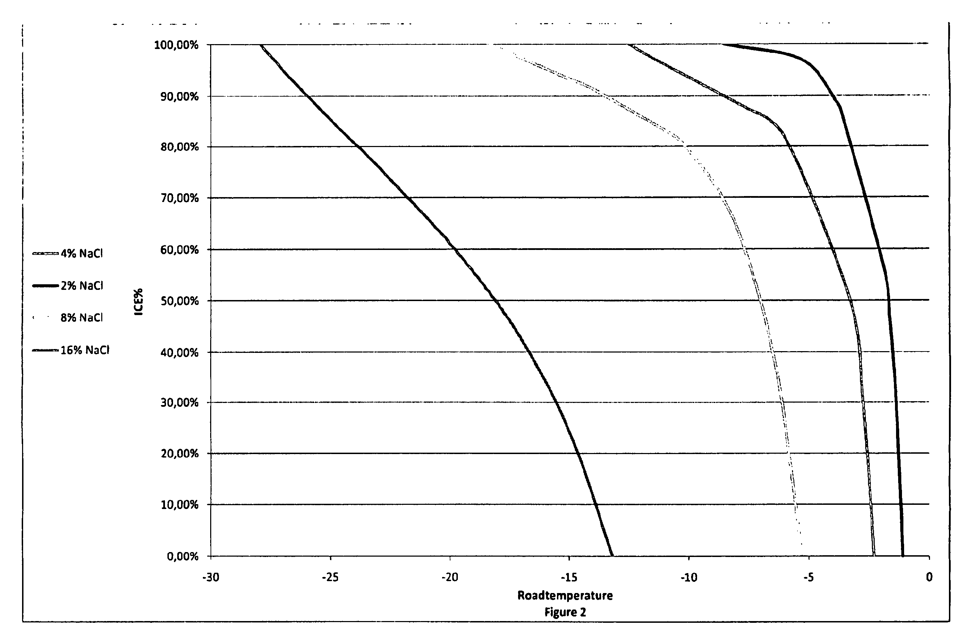

Ein Beispiel für Referenzmesswerte ist in Figur 2 in Form von Referenzmesskurven für Referenz-Eis-Wasser-Gemische unterschiedlichen Salzgehalts gezeigt. Auf der Ordinate des Diagramms von Figur 2 ist der prozentuale Anteil von Eis (Eisprozent) aufgetragen; auf der Abszisse des Diagramms von Figur 2 ist die Straßentemperatur (äquivalent der unter Versuchsbedingungen kontrollierten Temperatur) aufgetragen. Im vorliegenden Beispiel wurden Messreihen von Eisprozent (von 0 bis 100 %) in Abhängigkeit von der Straßentemperatur (von knapp unter Null Grad Celsius bis etwa -30 Grad Celsius) für einen Salzgehalt (NaCl) von 2%. 4 %, 8 % und 16 % erstellt.

Wie es aus Figur 2 ersichtlich ist, kann aus einem in Schritt 30 der Figur 1 bestimmten prozentualen Anteil von Eis von beispielsweise etwa 50 % und der in Schritt 10 der Figur 1 gemessenen Straßentemperatur von beispielsweise -6,8 Grad Celsius aus der dritten Messkurve von rechts ein Salzgehalt von 8% ermittelt werden (Schritt 40 der Figur 1). In anderen Worten lässt sich für jedes Paar von Eisprozent und Straßentemperatur eindeutig eine Messkurve oder eine durch Interpolation bereitgestellter Messkurven/Messreihen errechnete Kurve und somit ein dazugehöriger Salzgehalt bestimmen.

Wenn die entsprechende Messkurve identifiziert bzw. durch Interpolation bestehender Messkurven eine entsprechende Kurve berechnet ist, kann die zugehörige Gefriertemperatur entsprechend 0 Eisprozent in Schritt 50 der Figur 1 direkt, beispielhaft aus der Figur 2, abgelesen/bestimmt werden. Im gewählten Beispiel ergibt sich somit eine Gefriertemperatur von ungefähr -5,3 Grad Celsius für einen dem Paar von Eisprozent und Straßentemperatur entsprechenden Salzgehalt von 8 %.

## Patentansprüche

1. Verfahren zur Bestimmung der Gefriertemperatur eines Eis-Wasser-Gemischs auf einer Straßenoberfläche, das umfasst
Bereitstellen von Referenzmessungen von Eis-zu-Wasser-Verhältnissen in Abhängigkeit von Straßentemperaturen für unterschiedliche Salzgehalte von Referenz-Eis-Wasser-Gemischen;
Ermitteln einer Dicke einer Wasserschicht auf der Straßenoberfläche;
Ermitteln einer Dicke einer Eisschicht auf der Straßenoberfläche;
Bestimmen eines Eis-zu-Wasser-Verhältnisses des Eis-Wasser-Gemisches aus der ermittelten Dicke der Wasserschicht und der ermittelten Dicke der Eisschicht;
Ermitteln der Temperatur der Straßenoberfläche; und
Bestimmen der Gefriertemperatur des Eis-Wasser-Gemisches aus dem bestimmten Eis-zu-Wasser-Verhältnis und der ermittelten Temperatur mithilfe der bereitgestellten Referenzmessungen.

2. Das Verfahren gemäß Anspruch 1, in dem der Schritt des Bestimmens der Gefriertemperatur aus dem bestimmten Eis-zu-Wasser-Verhältnis und der ermittelten Temperatur mithilfe der bereitgestellten Referenzmessungen umfasst
Bestimmen des Salzgehaltes des Eis-Wasser-Gemisches aus dem bestimmten Eis-zu-Wasser-Verhältnis und der ermittelten Temperatur mithilfe der bereitgestellten Referenzmessungen; und
Bestimmen der Gefriertemperatur aus dem bestimmten Salzgehalt und den bereitgestellten Referenzmessungen.

3. Das Verfahren gemäß einem der vorhergehenden Ansprüche, in dem die Dicke der Wasserschicht und/oder die Dicke der Eisschicht mithilfe optischer Sensoren ermittelt wird.

4. Das Verfahren gemäß Anspruch 3, in dem die Dicke der Wasserschicht und/oder die Dicke der Eisschicht mithilfe von Infrarot-Spektroskopie ermittelt wird.

5. Das Verfahren gemäß einem der vorhergehenden Ansprüche, in dem die Temperatur der Straßenoberfläche mithilfe eines Infrarot-Temperatursensors ermittelt wird.

6. Das Verfahren gemäß einem der vorhergehenden Ansprüche, in dem die Gefriertemperatur kontinuierlich oder diskontinuierlich entlang zumindest eines Abschnitts der Straße mithilfe einer Vorrichtung bestimmt wird, die an einem Fahrzeug befestigt ist, und wobei das Verfahren Bewegen der Vorrichtung entlang der Straße durch Bewegen des Fahrzeugs umfasst.

7. Vorrichtung zur Bestimmung der Gefriertemperatur eines Eis-Wasser-Gemischs auf einer Straßenoberfläche, umfassend
eine Speichereinheit, die in der Referenzmesswerte von Eis-zu-Wasser-Verhältnissen in Abhängigkeit von Straßentemperaturen für unterschiedliche Salzgehalte von Referenz-Eis-Wasser-Gemischen gespeichert sind;
eine erste Sensoreinrichtung, die dazu eingerichtet ist, die Temperatur der Straßenoberfläche zu ermitteln;
eine zweite Sensoreinrichtung, die dazu eingerichtet ist, eine Dicke einer Wasserschicht auf einer Straßenoberfläche und eine Dicke einer Eisschicht auf der Straßenoberfläche zu ermitteln; und
eine Recheneinheit, die dazu eingerichtet ist, ein Eis-zu-Wasser-Verhältnis des Eis-Wasser-Gemisches aus der ermittelten Dicke der Wasserschicht und der ermittelten Dicke der Eisschicht zu bestimmen und aus dem bestimmten Eis-zu-Wasser-Verhältnis, der ermittelten Temperatur der Straßenoberfläche und den gespeicherten Referenzmesswerten die Gefriertemperatur des Eis-Wasser-Gemisches zu bestimmen.

8. Die Vorrichtung gemäß Anspruch 7, in der die zweite Sensoreinrichtung zumindest einen optischen Sensor umfasst und/oder die erste Sensoreinrichtung einen Infrarot-Temperatursensor umfasst.

9. Die Vorrichtung gemäß Anspruch 8, in der die zweite Sensoreinrichtung eine Infrarot-Spektroskopieeinrichtung umfasst.

10. Die Vorrichtung gemäß einem der Ansprüche 7 bis 9, die zumindest eine Lichtquelle umfasst, die dazu eingerichtet ist, Licht in einem vorbestimmten Wellenlängenbereich, insbesondere im Infrarotbereich, auszustrahlen.

11. Die Vorrichtung gemäß einem der Ansprüche 7 bis 10, in der die Recheneinheit dazu eingerichtet ist,
den Salzgehalt des Eis-Wasser-Gemisches aus dem bestimmten Eis-zu-Wasser-Verhältnis und der ermittelten Temperatur mithilfe der gespeicherten Referenzmesswerte zu bestimmen; und
die Gefriertemperatur aus dem bestimmten Salzgehalt und den gespeicherten Referenzmesswerten zu bestimmen.

12. Die Vorrichtung gemäß einem der Ansprüche 7 bis 11, wobei die Vorrichtung dazu eingerichtet ist, an einem Fahrzeug, insbesondere einem Personenkraftwagen oder Lastkraftwagen, angebracht zu werden.

## Claims

1. Method for determining the freezing temperature of an ice-water mixture on a road surface, comprising:
providing reference measurements of ice-to-water ratios as a function of road temperatures for different salt contents of reference ice-water mixtures;
detecting a thickness of a water layer on the road surface;
detecting a thickness of an ice layer on the road surface;
determining an ice-to-water ratio of the ice-water mixture from the detected thickness of the water layer and the detected thickness of the ice layer;
detecting the temperature of the road surface; and
determining the freezing temperature of the ice-water mixture from the determined ice-to-water ratio and the detected temperature by means of the provided reference measurements.

2. Method according to claim 1, in which the step of determining the freezing temperature from the determined ice-to-water ratio and the detected temperature by means of the provided reference measurements comprises:
determining the salt content of the ice-water mixture from the determined ice-to-water ratio and the detected temperature by means of the provided reference measurements; and
determining the freezing temperature from the determined salt content and the provided reference measurements.

3. Method according to any one of the preceding claims, in which the thickness of the water layer and/or the thickness of the ice layer is detected by means of optical sensors.

4. Method according to claim 3, in which the thickness of the water layer and/or the thickness of the ice layer is detected by means of infrared spectroscopy.

5. Method according to any one of the preceding claims, in which the temperature of the road surface is detected by means of an infrared temperature sensor.

6. Method according to any one of the preceding claims, in which the freezing temperature is determined continuously or discontinuously along at least a portion of the road by means of a device attached to a vehicle, and wherein the method comprises moving the device along the road by moving the vehicle.

7. Device for determining the freezing temperature of an ice-water mixture on a road surface, comprising:
a storage unit, in which reference measurement values of ice-to-water ratios as a function of road temperatures for different salt contents of reference ice-water mixtures are stored;
a first sensor means adapted to detect the temperature of the road surface;
a second sensor means adapted to detect a thickness of a water layer on a road surface and a thickness of an ice layer on the road surface; and
a computing unit adapted to determine an ice-to-water ratio of the ice-water mixture from the detected thickness of the water layer and the detected thickness of the ice layer, and to determine the freezing temperature of the ice-water mixture from the determined ice-to-water ratio, the detected temperature of the road surface and the stored reference measurement values.

8. Device according to claim 7, in which the second sensor means comprises at least one optical sensor and/or the first sensor comprises an infrared temperature sensor.

9. Device according to claim 8, in which the second sensor means comprises an infrared spectroscopy apparatus.

10. Device according to one any one of claims 7 to 9, which comprises at least one light source adapted to radiate light in a predetermined wavelength range, in particular in the infrared range.

11. Device according to any one of claims 7 to 10, in which the computing unit is adapted to determine
the salt content of the ice-water mixture from the determined ice-to-water ratio and the detected temperature by means of the stored reference measurement values; and
the freezing temperature from the determined salt content and the stored reference measurement values.

12. Device according to any one of claims 7 to 11, wherein the device is adapted to be mounted on a vehicle, in particular a car or a lorry.

## Revendications

1. Procédé pour définir la température de congélation d'un mélange glace-eau sur la surface d'une route, qui comprend les étapes consistant
à fournir des mesures de référence de rapports glace-eau en fonction de températures de route pour différentes teneurs en sel de mélange glace-eau de référence ;
à déterminer une épaisseur d'une couche d'eau sur la surface de la route ;
à déterminer une épaisseur d'une couche de glace sur la surface de la route ;
à définir un rapport glace-eau du mélange glace-eau à partir de l'épaisseur déterminée de la couche d'eau et de l'épaisseur déterminée de la couche de glace ;
à déterminer la température de la surface de la route ; et
à définir la température de congélation du mélange glace-eau à partir du rapport glace-eau défini et de la température déterminée, à l'aide des mesures de référence fournies.

2. Procédé selon la revendication 1, selon lequel l'étape qui consiste à définir la température de congélation à partir du rapport glace-eau défini et de la température déterminée, à l'aide des mesures de références fournies, comprend les étapes consistant
à définir la teneur en sel du mélange glace-eau à partir du rapport glace-eau défini et de la température déterminée, à l'aide des mesures de référence fournies ;
et à définir la température de congélation à partir de la teneur en sel définie et des mesures de référence fournies.

3. Procédé selon l'une des revendications précédentes, selon lequel l'épaisseur de la couche d'eau et/ou l'épaisseur de la couche de glace sont déterminées à l'aide de capteurs optiques.

4. Procédé selon la revendication 3, selon lequel l'épaisseur de la couche d'eau et/ou l'épaisseur de la couche de glace sont déterminées par spectroscopie infrarouge.

5. Procédé selon l'une des revendications précédentes, selon lequel la température de la surface de la route est déterminée à l'aide d'un capteur de température infrarouge.

6. Procédé selon l'une des revendications précédentes, selon lequel la température de congélation est définie de manière continue ou discontinue le long d'un tronçon au moins de la route à l'aide d'un dispositif qui est fixé à un véhicule, et étant précisé que le procédé comprend l'étape comprenant le déplacement du dispositif le long de la route grâce au déplacement du véhicule.

7. Dispositif pour définir la température de congélation d'un mélange glace-eau sur la surface d'une route, comprenant :
une unité de mémoire dans laquelle sont stockées des valeurs de mesure de référence de rapports glace-eau en fonction de températures de la route pour différentes teneurs en sel de mélanges glace-eau de référence ;
un premier dispositif capteur qui est conçu pour déterminer la température de la surface de la route ;
un second dispositif capteur qui est conçu pour déterminer une épaisseur d'une couche d'eau sur une surface de route ainsi qu'une épaisseur d'une couche de glace sur la surface de la route ; et
une unité de calcul qui est conçue pour définir un rapport glace-eau du mélange glace-eau à partir de l'épaisseur déterminée de la couche d'eau et de l'épaisseur déterminée de la couche de glace, et pour définir à partir du rapport glace-eau défini, de la température déterminée de la surface de la route et des valeurs de mesure de référence stockées la température de congélation du mélange glace-eau.

8. Dispositif selon la revendication 7, dans lequel le second dispositif capteur comprend au moins un capteur optique et/ou le premier dispositif capteur comprend un capteur de température infrarouge.

9. Dispositif selon la revendication 8, dans lequel le second dispositif capteur comprend un spectroscope infrarouge.

10. Dispositif selon l'une des revendications 7 à 9, qui comprend au moins une source de lumière qui est conçue pour émettre de la lumière dans une plage de longueur d'ondes prédéfinie, en particulier dans la plage infrarouge.

11. Dispositif selon l'une des revendications 7 à 10, dans lequel l'unité de calcul est conçue pour
définir à l'aide des valeurs de mesure de référence stockées la teneur en sel du mélange glace-eau à partir du rapport défini glace-eau et de la température définie ; et
définir la température de congélation à partir de la teneur en sel définie et des valeurs de mesure de référence stockées.

12. Dispositif selon l'une des revendications 7 à 11, étant précisé qu'il est conçu pour être installé sur un véhicule, en particulier une voiture particulière ou un camion.
